# EUROPEAN PATENT APPLICATION

(11) **EP 1 707 896 A2**
(43) Date of publication of application: **04.10.2006**
(21) Application number: 06110870.0
(22) Date of filing: 08.03.2006
(51) Int. Cl.: F24H 8/00, F24H 9/00

(54) **Central heating boiler auxiliary heat exchanger**

(30) Priority: 09.03.2005 GB 0504796
(71) Applicant: Heating World Group Limited, Birmingham B18 7AD (GB)
(72) Inventor: Bosworth, John Frederick Michael, Kidderminster, Worcestershire DY10 3PJ (GB)
(74) Representative: Gillam, Francis Cyril

(57) **Abstract**

An auxiliary heat exchanger for the flue gases of an oil-fired or gas-fired central heating boiler, has a box-like water chamber (10) with two relatively large opposed external surfaces (12) spaced apart by a relatively small distance. There is a water inlet (16) to and a water outlet (17) from the chamber (10). A box-like casing (11) surrounds the external surfaces (12) with a small clearance, the casing having a flue gas inlet (32) and a flue gas outlet (33). The casing (11) has an open side wall so that the casing is removable from the chamber (10) for servicing by sliding the casing relative to the chamber. A seal arrangement (23) closes the space between the casing and the chamber.

## Description

This invention relates to an auxiliary heat exchanger for use with an oil-fired or gas-fired central heating boiler, to recover heat from the flue gas exhaust from the boiler.

A conventional oil-fired or gas-fired central heating boiler has a main heat exchanger through which the hot products of combustion are passed, in order that the temperature of water within the main heat exchanger may be raised. Within the main heat exchanger, the temperature of the products of combustion fall but on being discharged as exhaust gases to the flue from the boiler, those gases typically still are within the temperature range of 100°C to 200°C. The heat in those exhaust gases is then lost within the flue and in the atmosphere, on leaving the flue.

It is known to provide an auxiliary heat exchanger as a part of a conventional oil-fired or gas-fired boiler, or to fit an auxiliary heat exchanger to the flue leading from that boiler, to extract further heat from the flue gases. The most efficient operation is achieved when the auxiliary heat exchanger extracts from those gases sufficient heat to cause condensation of the water vapour entrained within the flue gases, that water vapour itself being one of the products of combustion. By condensing the water vapour, the latent heat of condensation of that vapour may be recovered by the auxiliary heat exchanger.

Condensing auxiliary heat exchangers are more commonly employed on gas-fired boilers, but are less common with oil-fired boilers in part because the condensate is relatively corrosive. This is because fuel oil has a relatively high sulphur concentration, leading to acidic condensate. The development of corrosion-resistant materials has permitted the use of condensing auxiliary heat exchangers with oil-fired boilers, to the extent that regulations soon to be introduced in the United Kingdom will require all new installations of oil-fired boilers to employ condensing auxiliary heat exchangers.

A problem with condensing auxiliary heat exchangers is that the relatively low temperature of operation allows sooting to occur within the heat exchanger, especially during start-up of a boiler. As soon as there is any significant deposit of soot, the efficiency of the auxiliary heat exchanger rapidly falls. Further, to ensure the maximum possible surface areas are contacted by the flue gases to extract heat therefrom, it is necessary to provide relatively narrow ducts for the flue gases and so any significant deposit of soot is likely to block those ducts. In turn, this leads to the requirement for frequent servicing of the auxiliary heat exchanger, even though no servicing may be required for the boiler itself.

It is a principal aim of the present invention to provide an auxiliary heat exchanger for an oil-fired or gas-fired central heating boiler which is relatively easy to service and maintain in optimum operating condition, while still maximising the extraction of heat from the exhaust gases of a boiler.

According to this invention, there is provided auxiliary heat exchanger for use with an oil-fired or gas-fired central heating boiler having a main heat exchanger, which auxiliary heat exchanger is arranged in use to extract heat from the boiler flue gases leaving the main heat exchanger and comprises:
- a box-like water chamber having two opposed external surfaces each of a relatively large surface area and with a relatively small spacing therebetween, there being a water inlet to the interior of the chamber and a water outlet therefrom;
- a box-like outer casing surrounding at least the greater part of the opposed external surfaces of the water chamber and having an open edge wall whereby the casing can be fitted to the water chamber and removed therefrom through said open edge wall, the casing having a pair of opposed internal surfaces each closely spaced from a respective surface of said two opposed surfaces of the water chamber, and the outer casing further having a flue gas inlet and a flue gas outlet;
- a seal arrangement to effect a seal between the open edge wall of the outer casing and the water chamber; and
- releasable clamping means to hold the outer casing to the water chamber and which when released permits the removal of the outer casing from the water chamber.

When installed in a central heating system including an oil-fired or gas-fired boiler, the auxiliary heat exchanger of this invention may easily be dismantled to allow cleaning, without disturbing the water connections to the water chamber. This is achieved by releasing the clamping means and also disconnecting the flue gas inlets and outlets of the outer casing from the boiler and the boiler flue respectively, whereafter the outer casing may be removed from the water chamber, thereafter permitting the cleaning of the external surfaces of the water chamber and the internal surfaces of the outer casing. Once done, the outer casing may be reassembled to the water chamber, the flue gas connections to the outer casing remade and then the boiler may be put back in service, with only a minimal down-time.

In order to enhance efficiency of the auxiliary heat exchanger, it is preferred that internal baffles are provided within the water chamber to define an extended water passage from the water inlet to the water outlet, and that internal baffles are provided within the outer casing to direct flue gas flow over the two opposed surfaces of the water chamber, on that flow passing from the flue gas inlet to the flue gas outlet.

The clamping means may comprise at least one, and preferably two, screw-threaded studs projecting from the water chamber and extending through respective corresponding holes formed in an edge wall of the outer casing, each stud being engaged by a corresponding screw-threaded nut to permit the casing to be secured to the water chamber.

If a greater heat extraction capacity is required for the auxiliary heat exchanger, it may comprise a plurality of similar water chambers disposed side-by-side with a relatively narrow gap between the adjacent panels thereof, the outer casing being configured to embrace the plurality of water chambers.

Other features of the auxiliary heat exchanger will be become apparent from the following description of the preferred embodiment and also from the appended claims.

This invention extends to an oil-fired or gas-fired central heating boiler whenever fitted with an auxiliary heat exchanger of this invention, and to a central heating installation including a hot water circuit provided with radiators, where an auxiliary heat exchanger of this invention is arranged so that the flue gas from the boiler passes through the outer casing over the surfaces of the water chamber, and the return water flow from the radiators passes through the water chamber before entering the main heat exchanger in the boiler.

By way of example only, one specific embodiment of auxiliary heat exchanger of this invention will now be described in detail, reference being made to the accompanying drawings in which:-
Figure 1 is an isometric view of the heat exchanger, with the outer casing removed from the water chamber, but not showing a sealing panel normally fitted to the water chamber;
Figure 2 corresponds to Figure 1 and including the sealing panel, but with various panels of the outer casing and water chamber shown in outline in order to illustrate the internal configuration of the auxiliary heat exchanger;
Figure 3 is an isometric view of the heat exchanger of Figure 1 but from the other side and also showing the sealing panel and a boiler with which the auxiliary heat exchanger is used;
Figure 4 corresponds to Figure 3 but with various panels shown in outline only, in order to illustrate the internal configuration;
Figures 5A and 5B are diagrammatic side and plan views showing the water chamber;
Figures 6A and 6B are diagrammatic side and plan views showing the outer casing; and
Figures 7A and 7B show the stacking of two and three water chambers respectively side-by-side, to increase the capacity of the auxiliary heat exchanger.

The embodiment of auxiliary heat exchanger shown in the drawings is intended for use with an oil-fired domestic central heating boiler to extract heat from the flue gas exhausted from the boiler. The auxiliary heat exchanger comprises a generally box-like water chamber 10 of rectangular cross-section and an outer casing 11 which is arranged to receive and fit closely over the water chamber 10, the outer casing also being generally box-like and of rectangular cross-section.

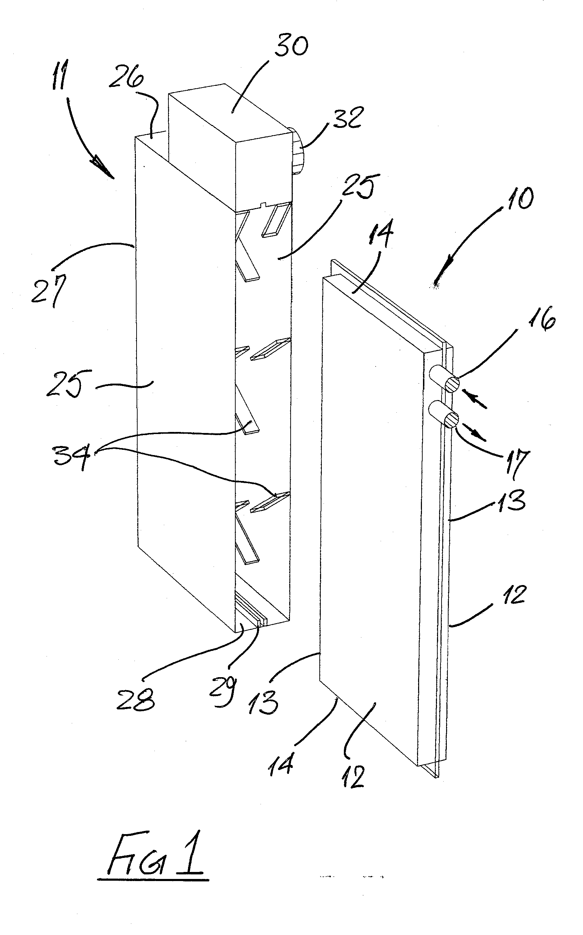

The water chamber 10 has a pair of parallel side panels 12 each of a relatively large area and held spaced apart by edge walls 13,14 and also by internal baffles arranged to define an extended pathway for water passing through the water chamber, from an inlet pipe 16 to an outlet pipe 17. Though various baffle arrangements could be provided within the water chamber 10, in this embodiment there is an upper baffle 18 which defines a plenum 19, the inlet pipe 16 leading into that plenum. From there, the water passes through apertures 20 in an upper baffle 18, to be guided to a lower part of the water chamber by parallel baffles 21 and then back to the water outlet pipe 17. Around the periphery of the edge walls 14 and rear edge wall 13 there is an upstanding rib 22 for a purpose to be described below. The edge wall 13 carrying the inlet and outlet pipes supports a sealing plate 23 (not shown in Figure 1) to effect a seal to the outer casing 11 as will be described hereinafter.

The outer casing 11 has a pair of side panels 25 which lie parallel to the side panels 12 of the water chamber 10 and are held spaced apart by edge walls 26,27,28. No edge wall is provided opposed to edge wall 27; rather, as shown in Figure 1, the side of the casing 11 opposed to edge wall 27 is open, whereby the casing may be fitted to the water chamber 10 to surround that chamber, or to be removed therefrom. The lower edge wall 28 of the outer casing has a channel-shaped rail 29 and a groove is formed in the upper edge wall 26, to receive the upstanding rib 22 of the water chamber, thereby positively to locate the relative position of the water chamber 10 with respect to the outer casing 11 and permit the casing to be slid with respect to the water chamber.

An exhaust gas box 30 is mounted on the upper edge wall 26 of the outer casing, that gas box being divided by an internal partition 31 into two sub-boxes which communicate through openings (not shown) in the upper edge wall 26 to the interior of the outer casing 11. The sub-boxes have respective stub pipes 32,33 fitted thereto, respectively to serve as a flue gas inlet and a flue gas outlet for the outer casing 11. The inner faces of the side panels 25 of the outer casing carry baffles 34 arranged to cause flue gas flowing into the inlet stub pipe 32 to descend down to a lower part of the casing, between the side panels 25 thereof and the side panels 12 of the water chamber 10, and then to return back up to the outlet stub pipe 33, again between the side panels 25 of the outer casing and the side panels 12 of the water chamber 10.

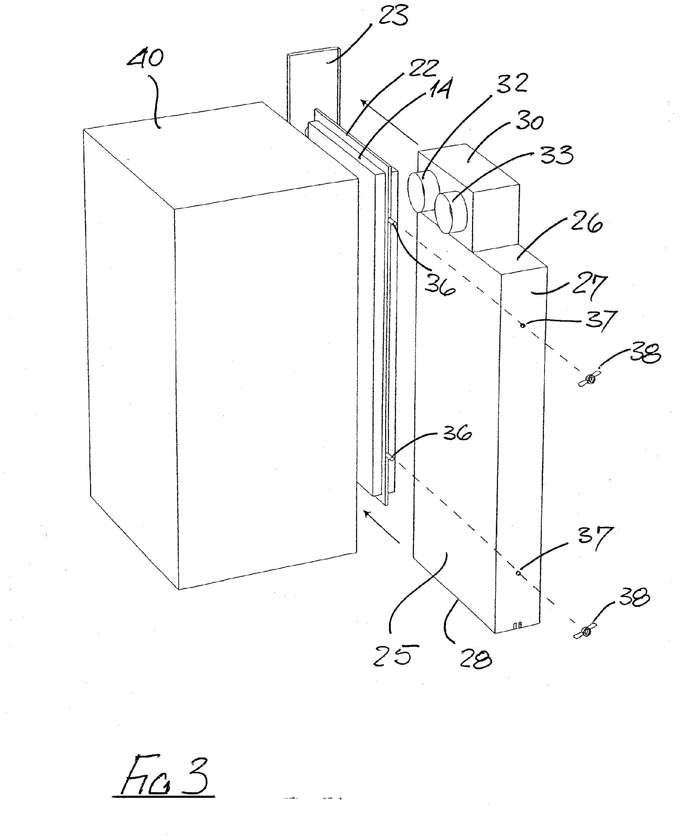

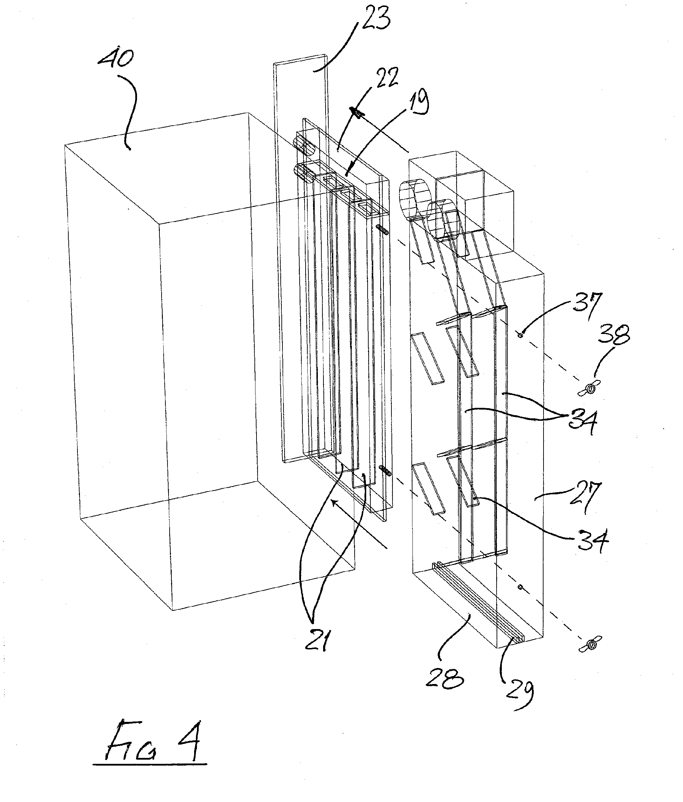

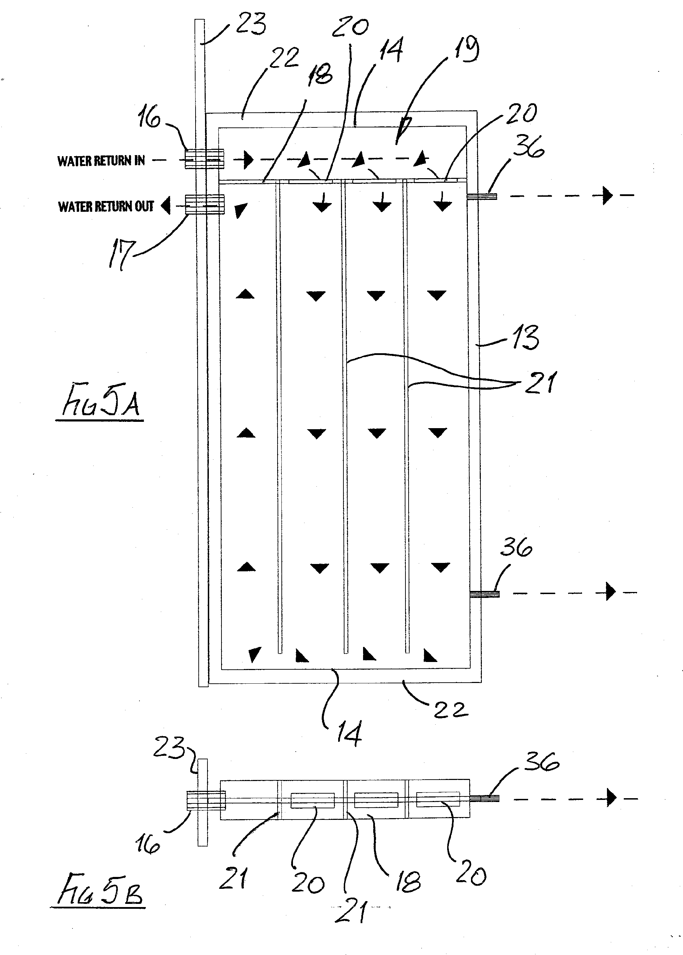

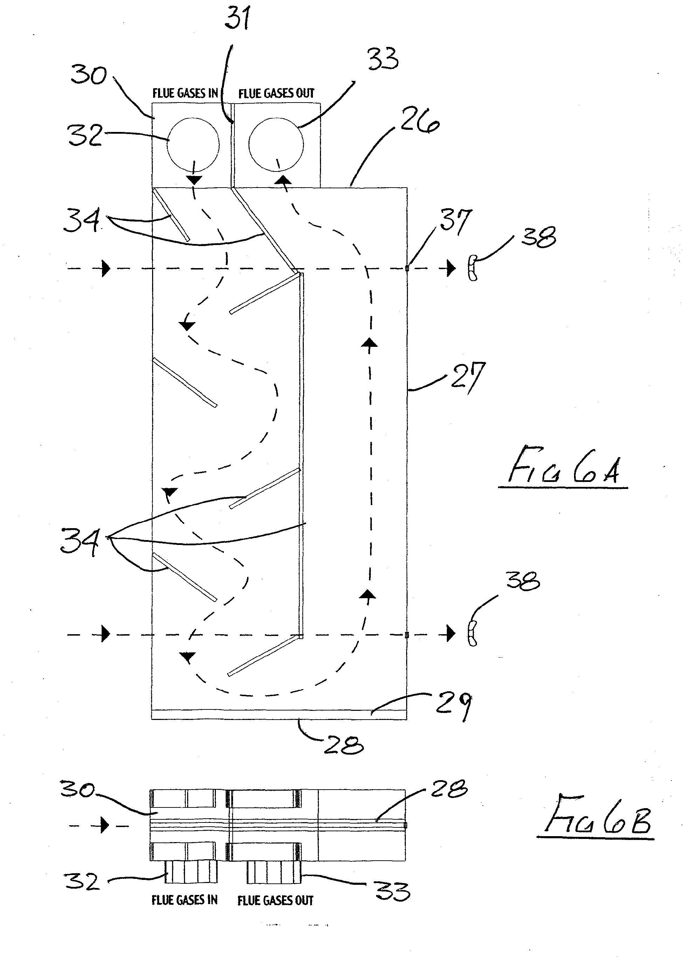

As best seen in Figures 3 to 6, the side edge wall 14 of the water chamber 10 is provided with a pair of projecting threaded studs 36 and the side edge wall 27 of the outer casing 11 is provided with a corresponding pair of holes 37 through which the studs 36 will project when the outer casing 11 has been fully fitted over the water chamber 10. Nuts, such as the wing nuts 38 shown in Figures 4 and 6A, are threaded on to the studs 36, in order securely to hold the outer casing to the water chamber. Lock nuts or other anti-vibration nuts may instead be employed to give greater security, if required.

The peripheral shape of the sealing plate 23 is at least as great as that of the open side of the outer casing 11, whereby the tightening of the outer casing to the water chamber 10 brings the sealing plate 23 into engagement with the edges of the outer casing. A suitable gasket material (not shown) is provided on the sealing plate or on the edges of the outer casing, whereby an effective gas-tight seal may be achieved on tightening the nuts 38.

In use, the water chamber 10 is connected in series with the return water from the radiator circuit of a central heating system which is operated by the central heating boiler. The chamber 10 should be disposed closely adjacent the boiler 40 as shown diagrammatically in Figures 3 and 4, and the flue arrangement of the boiler modified so that the outlet for the flue gases from the main heat exchanger (not shown) of the boiler is directed to the flue gas inlet pipe 32 and the flue gas outlet pipe 33 from the auxiliary heat exchanger is directed into the exhaust flue from the boiler. To permit these connections to be made, it is preferred that flexible heat resistant pipe (not shown) be employed, appropriate lengths of that pipe being connected within the boiler to the main heat exchanger outlet and to the flue, those lengths also being held to the stub pipes 32,33 by means of screw-threaded circular pipe clamps.

In normal operation, the flue gases exhausted from the main heat exchanger pass through the auxiliary heat exchanger, flowing through the spaces between the side panels 25 of the outer casing 11 and the side panels 12 of the water chamber 10, those flue gases being directed to flow over the entire external area of the side panels 12 by means of the baffles 34, as shown in Figure 6A. Water flows through the water chamber 10 from the inlet pipe 16 to the outlet pipe 17, that water being caused to flow over the entire internal surface of panels 12 by virtue of the baffles 20,21. In this way, optimum heat transfer from the hot flue gases from the boiler to the cool return water to be heated in the main heat exchanger of the boiler can be achieved. Provided the operating conditions are set properly, condensation will occur within the outer casing 11 and a suitable drain arrangement (not shown) for the condensate must be provided.

Should servicing of the auxiliary heat exchanger be required, for example on account of the deposition of soot on the internal surfaces of the auxiliary heat exchanger, it is a relatively simple matter to release the flexible pipes from the stub pipes 32,33 by loosening the circular clamps, releasing the nuts 38 and then sliding the outer casing 11 off the water chamber 10. That outer casing may be taken outside for cleaning and the surfaces of the water chamber 10 may also be cleaned, for example using a vacuum cleaner to minimise mess. Once cleaned, the outer casing is fitted over the water chamber once more by engaging the grooves thereof with the ribs 22 of the water chamber, and when fully containing the water chamber, the nuts 38 are tightened. As soon as the flexible pipes have been secured to the stub pipes 32,33, the boiler may be put back into operation. During such servicing, there is no need for the water connections to be disturbed, in any way.

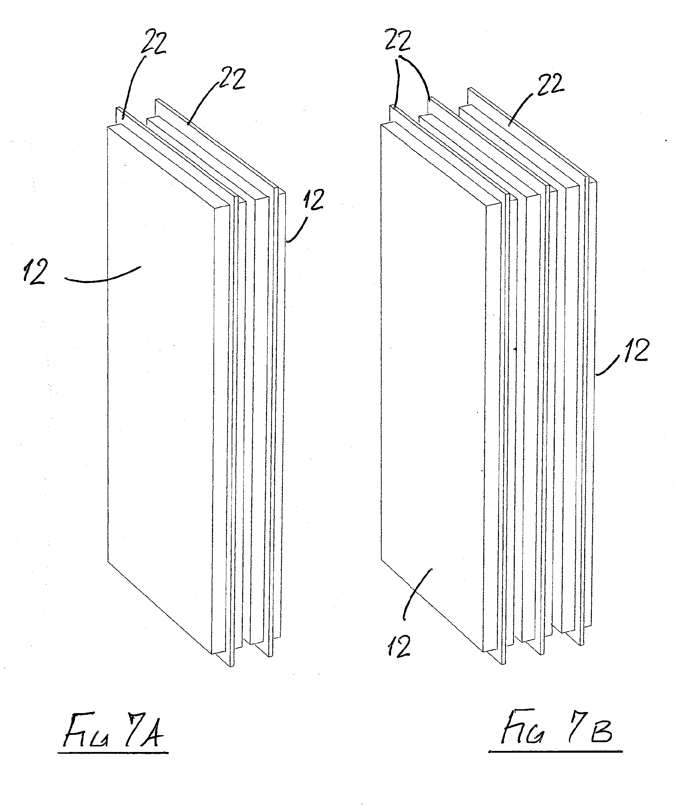

Though the arrangement described above may be sufficient for use with a small domestic central heating boiler to achieve condensation, and so recovery of the latent heat of condensation of water vapour in the boiler exhaust gases, a larger boiler may require an auxiliary heat exchanger with a greater capacity. This may be achieved by stacking two water chambers side-by-side, as shown diagrammatically in Figure 7A, or by stacking even more water chambers side-by-side - Figure 7B shows three such water chambers stacked in this way. For a stacked arrangement, suitable baffle arrangements should be provided between the opposed panels of adjacent pairs of water chambers. The outer casing must be modified to accommodate the number of water chambers provided, both as regards the width of the edge walls of the outer casing and also to provide the required grooves for locating the water chambers.

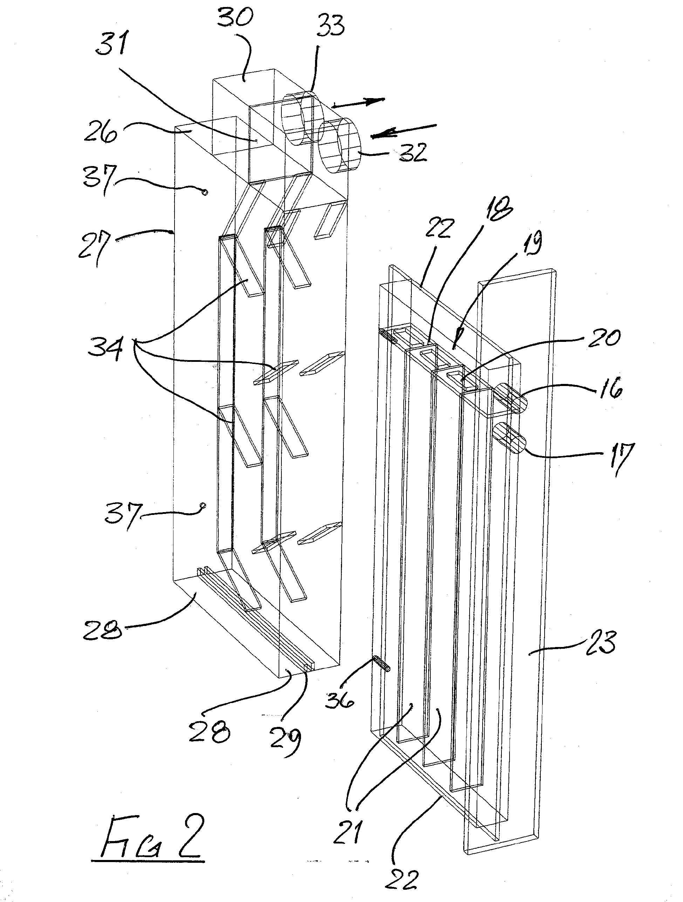

As an alternative to stacking the water chambers and modifying the outer casings to accommodate the stacked chambers, more than one auxiliary heat exchanger as described with reference to Figures 1 to 6 may be provided and stacked side-by-side. In this case, the flue gas stub pipes 32,33 of the second (and any subsequent) auxiliary heat exchanger should connect to the gas box 30 of the first auxiliary heat exchanger. The internal arrangement within the respective gas boxes must be modified in order to allow a flue gas flow path through all of the outer casings, in series, before returning to the outlet stub pipe 33 of the first heat exchanger.

## Claims

1. An auxiliary heat exchanger for use with an oil-fired or gas-fired central heating boiler (40) having a main heat exchanger, which auxiliary heat exchanger is arranged in use to extract heat from the boiler flue gases leaving the main heat exchanger and comprises:
- a box-like water chamber (10) having two opposed external surfaces (12) each of a relatively large surface area and with a relatively small spacing therebetween, there being a water inlet (16) to the interior of the chamber (10) and a water outlet (17) therefrom;
- a box-like outer casing (11) surrounding at least the greater part of the external surfaces (12) of the water chamber and having an open edge wall whereby the casing (11) can be fitted to the water chamber (10) and removed therefrom by moving the water chamber through said open edge wall, the casing (11) having a pair of opposed internal surfaces (25) each closely spaced from a respective external surface (12) of the water chamber, and the outer casing further having a flue gas inlet (32) and a flue gas outlet (33);
- a seal arrangement (23) to effect a seal between the open edge wall of the outer casing and the water chamber; and
- releasable clamping means (36,38) to hold the outer casing (12) to the water chamber and which when released permits the removal of the outer casing (11) from the water chamber (10).

2. An auxiliary heat exchanger as claimed in claim 1, wherein internal baffles (21) are provided within the water chamber (10) to define an extended water passage from the water inlet (16) to the water outlet (17).

3. An auxiliary heat exchanger as claimed in claim 1 or claim 2, wherein internal baffles (34) are provided within the outer casing (11), to direct the flue gas flow over said two opposed surfaces (12) of the water chamber (10), on passing from the flue gas inlet (32) to the flue gas outlet (33).

4. An auxiliary heat exchanger as claimed any of the preceding claims, wherein the water chamber (10) has a substantially rectangular cross-section.

5. An auxiliary heat exchanger as claimed in any of the preceding claims, wherein the water inlet (16) and the water outlet (17) are provided in an edge wall (13) of the water chamber (10), extending between said two opposed external surfaces (12) of the water chamber, which side edge wall preferably remains exposed through the open side of the outer casing (11) when the water chamber is located therewithin.

6. An auxiliary heat exchanger as claimed in any of the preceding claims, wherein the outer casing (11) has a substantially rectangular cross-section.

7. An auxiliary heat exchanger as claimed in claim 6, wherein the clamping means (36,38) is arranged to act between an edge wall (27) of the outer casing (11) opposed to the open edge wall thereof and the edge wall (13) of the water chamber (10) which lies alongside said edge wall of the outer casing.

8. An auxiliary heat exchanger as claimed in any of the preceding claims, wherein the seal arrangement comprises a flange (23) extending outwardly from the water chamber (10) and engaged with the outer casing (11) around the open side edge thereof, said flange (23) preferably being provided with a sealing gasket which mates with the outer casing (11).

9. An auxiliary heat exchanger as claimed in any of the preceding claims, wherein a flue gas box (30) is provided on the outer casing (11), the flue gas box (30) including connection pipes (32,33) for incoming flue gas from a boiler (40) and outgoing flue gas to a flue.

10. An auxiliary heat exchanger as claimed in any of the preceding claims, wherein the outer casing (11) includes location means to hold the water chamber (10) in a pre-defined location with respect to the outer casing, said location means preferably comprising a rib (22) projecting from opposed surfaces of the water chamber (10) and grooves (29) formed in the outer casing (11) and in which the rib (22) is received, whereby the water chamber (10) is located by the rib engaged with the grooves and may slide with respect thereto.

11. An auxiliary heat exchanger as claimed in any of the preceding claims, wherein there is a plurality of water chambers (10) disposed side-by-side in alignment with a relatively narrow gap between the adjacent panels thereof, the outer casing (11) embracing the plurality of water chambers.

12. The combination of a central heating boiler and an auxiliary heat exchanger as claimed in any of claims 1 to 11, wherein the flue gas inlet (32) to the auxiliary heat exchanger is connected to the flue gas outlet from the boiler and the flue gas outlet (33) from the auxiliary heat exchanger is directed to a flue for the boiler flue gases, and outlet (17) from the water chamber (10) is connected to the return flow inlet of the boiler.
